Europäisches Patentamt

European Patent Office

Office européen des brevets

(19)

(11) **EP 1 225 440 A1**

(12) **EUROPÄISCHE PATENTANMELDUNG**

(43) Veröffentlichungstag:
**24.07.2002 Patentblatt 2002/30**

(51) Int Cl.⁷: **G01N 21/21**, G01B 11/06

(21) Anmeldenummer: **01128571.5**

(22) Anmeldetag: **30.11.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **20.01.2001 DE 10102623**

(71) Anmelder: **GKSS-FORSCHUNGSZENTRUM GEESTHACHT GMBH**
**21502 Geesthacht (DE)**

(72) Erfinder: **Schubert, Dirk, Dr.**
**69493 Leutershausen (DE)**

(74) Vertreter: **Niedmers, Ole, Dipl.-Phys.**
**Patentanwälte,**
**Niedmers & Seemann,**
**Van-der-Smissen-Strasse 3**
**22767 Hamburg (DE)**

(54) **Verfahren und Vorrichtung zur Bestimmung des Molekulargewichts von Polymeren**

(57) Es wird ein Verfahren und eine Vorrichtung (10) zur Bestimmung des Molekulargewichts von Polymeren vorgeschlagen. Dabei wird eine dünne Polymerschicht (12) erzeugt, die mittels einer Einrichtung (11) zu deren Herstellung im ersten Verfahrensschritt bereitgestellt wird. Nachfolgend wird mittels eines Ellipsometers (13) die Schichtdicke (14) der dünnen Polymerschicht (12) ermittelt, wobei das Ellipsometer oberhalb der Polymerschicht (12) angeordnet ist. Über die Ermittlung der Schichtdicke (14) mittels des Ellipsometers (13) kann das Molekulargewicht des die dünne Polymerschicht (12) bildenden Polymers hergeleitet werden.

Fig. 3

EP 1 225 440 A1

**Beschreibung**

Die Erfindung betrifft ein Verfahren zur Bestimmung des Molekulargewichts von Polymeren sowie eine Vorrichtung, mit der das Verfahren ausgeführt werden kann.

Im Bereich der Polymerchemie ist es in vielen Fällen nützlich, wenn nicht sogar zwingend, Aufschluß über das mit einer Polymerisationsanlage erzeugte Polymer in bezug auf das Molekulargewicht des Polymeres zu erhalten, und zwar nicht nur für den laufenden Produktionsprozeß, sondern auch für die Prozeßüberwachung, um eine fortlaufende Qualitätssicherung des hergestellten Polymeres zu gewährleisten. Chemische Polymere werden in nahezu allen technischen, gewerblichen und privaten Bereichen eingesetzt, so daß ein fortlaufender hoher Bedarf an Überwachungseinrichtungen besteht, mit denen schnell, zuverlässig und mit hoher Genauigkeit das Molekulargewicht von Polymeren ermittelt werden kann, da aus dem Molekulargewicht für den Fachmann genaue Rückschlüsse auf die Art und den Aufbau der Polymere gezogen werden können.

Bisherige Verfahren zur Bestimmung des Molekulargewichts von Polymeren haben den Nachteil, daß sie verhältnismäßig komplex und sehr langsam sind und zudem ungenau und anfällig sind, so daß sie an sich in einen laufenden Produktionsprozeß, d.h. beispielsweise in eine Polymerisationsanlage, nicht integrierbar sind. Das Molekulargewicht von Polymeren wurde bisher bspw. durch Osmometrie, Lichtstreuung, Gelpermeations-Chromatographie usw. bestimmt.

Es ist deshalb Aufgabe der vorliegenden Erfindung, ein Verfahren und eine Vorrichtung zu schaffen, mit denen eine schnelle, zuverlässige und hochgenaue Bestimmung des Molekulargewichts von Polymeren möglich ist, wobei das Verfahren geeignet sein soll, auch in einen laufenden Produktionsprozeß integriert zu werden, so daß fortlaufend die Kontrolle der Produktion im Sinne einer Prozeßüberwachung möglich ist und wobei die Vorrichtung bspw. einfach herstellbar ist und angestrebt ist, diese aus Vorrichtungselementen bestehen zu lassen, die als Elemente wenigstens teilweise im Handel erhältlich sind, so daß die Vorrichtung einfach herstellbar, kostengünstig bereitstellbar und geeignet sein soll, das erfindungsgemäße Verfahren einfach und schnell auszuführen.

Gelöst wird die Aufgabe gem. dem erfindungsgemäßen Verfahren dadurch, daß eine dünne Polymerschicht bereitgestellt wird, und daß nachfolgend mittels einer ellipsometrischen Methode die Dicke der dünnen Polymerschicht ermittelt wird, wobei aus der ermittelten Dicke über die Beziehungen

$$\text{Schichtdicke } d \sim [\eta]^{1/3}$$

und

$$[\eta] = KM^a \text{ (Staudinger Gleichung)}$$

das Molekulargewicht des Polymers hergeleitet wird und wobei

$$[\eta] = \text{Grenzviskositätszahl,}$$

$$K = \text{Konstante [Volumen/Masse],}$$

$$a = \text{Konstante und}$$

$$M = \text{Molekulargewicht}$$

sind.

Der Vorteil der erfindungsgemäßen Lösung besteht im wesentlichen darin, daß mittels der ellipsometrischen Methode eine schnelle, direkte und berührungsfreie Ermittlung der Schichtdicke möglich ist, wobei die Schichtdicke vom Molekulargewicht des Polymers abhängt, so daß sich aus der Schichtdicke direkt das Molekulargewicht des Polymers herleiten läßt. Die Schichtdicke läßt sich mit einer Genauigkeit im Bereich von $10^{-9}$m mittels der ellipsometrischen Methode ermitteln, und zwar in wenigen Sekunden. Ein weiterer wesentlicher Vorteil des Verfahrens ist der, daß dieses sich ohne weiteres automatisieren läßt, so daß das Verfahren direkt bei großtechnischen Polymerisationsanlagen Anwendung finden kann und so in situ den Verlauf der Polymerisation an verschiedenen Stellen einer derartigen Anlage überwachen kann und auch als Verfahren zur Anwendung bei Qualitätssicherungsmaßnahmen geeignet ist.

Es ist sogar möglich, mittels des erfindungsgemäßen Verfahrens vorteilhafterweise direkt das "Produkt" (Polymer in Lösung) zu entnehmen und daraus die dünne Schicht zur Molekulargewichtsbestimmung bereitzustellen und die daraus gewonnenen Daten wiederum zur Prozeßsteuerung in Polymerisationsanlagen zu verwenden.

Gem. einer sehr vorteilhaften Ausgestaltung des Verfahrens wird die dünne Polymerschicht durch ein sog. Spin-Coat-Verfahren hergestellt. Grundsätzlich ist zwar jedes Verfahren erfindungsgemäß anwendbar bzw. mit dem erfindungsgemäßen Verfahren integrierbar, das geeignet ist, eine ausreichend dünne Polymerschicht hervorzubringen, das Spin-Coat-Verfahren hat aber den Vorteil gegenüber anderen Verfahren zur Herstellung dünner Polymerschichten, daß dieses auf sehr einfache und hochgenauere reproduzierbare Weise dünne Polymerschichten erzeugen kann, und zwar in sehr kurzer Zeit. In Kombination mit der ellipsometrischen Methode zur Bestimmung der Dicke der durch das Spin-Coat-Verfahren hergestellten dünnen Polymerschicht kann es zu der geforderten schnellen Ermittlung des Molekulargewichts des Polymers sehr entscheidend beitragen und die Geschwindigkeit, mit der das erfindungsgemäße Verfahren insgesamt zur Ermittlung des Molekulargewichts betrieben werden kann, kann dadurch entscheidend erhöht werden.

Um nach Ermittlung der Schichtdicke der dünnen Polymerschicht und der Herleitung des Molekulargewichts möglichst schnell eine erneute Untersuchung des Polymers mittels des erfindungsgemäßen Verfahrens ausführen zu können, wird vorteilhafterweise die hergestellt Polymerschicht nach erfolgter Schichtdickenbestimmung von einem Substrat, auf auf dem sie erzeugt worden war, durch Versetzung mit Lösemittel unter Rotation des Substrats vom Substrat entfernt. Durch die Zentrifugalkräfte wird somit das Polymer, gelöst durch das zugeführte Lösemittel, vom Substrat entfernt, wobei vorzugsweise, in Abhängigkeit des Polymers, der Löslichkeit des Polymers und des Lösemittels das Substrat über ein vorbestimmtes Zeitintervall nach der Entfernung des Polymers weiterhin in Rotation gehalten wird, so daß auch das Lösemittel auf dem Substrat verdampft ist und das Substrat zum Aufbringen einer neuen Polymerlösung zur Erzeugung einer neuen dünnen Polymerschicht bereit ist.

Eine Vorrichtung zur Bestimmung des Molekulargewichts von Polymeren, mit der das vorbeschriebene Verfahren ausgeführt werden kann, ist durch eine Einrichtung zur Herstellung einer dünnen Polymerschicht sowie eines Ellipsometers gekennzeichnet, wobei das Ellipsometer zur Bestimmung der Schichtdicke der Polymerschicht oberhalb der Polymerschicht angeordnet ist.

Der Vorteil der erfindungsgemäßen Vorrichtung besteht darin, daß bspw. zur Herstellung einer dünnen Polymerschicht ein sog. Spin-Coater herangezogen werden kann, d.h. auf ein Vorrichtungselement zurückgegriffen werden kann, mittels dem durch einfache Rotation eines Substratisches, auf das eine Polymerlösung aufgegeben wird, infolge der Zentrifugalkräfte bei der Rotation eine gleichmäßig und nahezu beliebig dünne Polymerschicht schnell hergestellt werden kann. Zum anderen kann auf an sich im Stand der Technik bekannte Ellipsometer als weiterem Vorrichtungselement zurückgegriffen werden, so daß durch die Kombination beider Vorrichtungselemente eine zwar verhältnismäßig einfache aber hochwirksame apparative Gesamtkonstruktion erhältlich ist, mittels der auch das erfindungsgemäße Verfahren, s.o., auf einfache und schnelle Weise und hocheffektiv und hochgenau durchgeführt werden kann.

Grundsätzlich kann die Vorrichtung aber auch mit einer beliebigen anderen Einrichtung zur Herstellung einer dünnen Polymerschicht realisiert werden, solange die Schichtdicke mit dem Molekulargewicht korreliert.

Um während des Betriebes der Vorrichtung während des Vorganges, bei dem die dünne Polymerschicht hergestellt wird, zu verhindern, daß verdampfendes Lösemittel die Optiken des Ellipsometers beaufschlagt, sind diese verschließbar ausgebildet, so daß die Optiken für den nachfolgenden ellipsometrischen Untersuchungsvorgang unbeeinflußt sind.

Gem. einer weiteren vorteilhaften Ausgestaltung der Vorrichtung weist die Einrichtung zur Herstellung der Polymerschicht wenigstens eine Zuführeinrichtung für die Zufuhr einer Polymerlösung auf das zur Ausbildung der Polymerschicht in Rotation versetzbare Substrat, wobei die Zuführeinrichtung für die Polymerlösung einerseits zeitlich und andererseits mengenmäßig hochgenau und auf reproduzierbare Weise Polymerlösung auf das Substrat zur Ausbildung einer dünnen Polymerschicht daraus geben kann.

Um im Sinne des vorangehend Gesagten das Substrat nach der erfolgten Untersuchung der darauf ausgebildeten dünnen Polymerschicht mittels des Ellipsometers das Substrat möglichst schnell wieder von der darauf liegenden dünnen Polymerschicht zur Durchführung einer nächsten Untersuchung einer weiteren, neuen Polymerschicht zu befreien, ist es schließlich vorteilhaft, daß die Vorrichtung vorzugsweise eine Zuführeinrichtung für die Zufuhr eines Lösemittels für das Polymer auf die auf dem in Rotation versetzbaren Substrat ausgebildete Polymerschicht aufweist. Über diese Zuführeinrichtung wird ein für das die Polymerschicht bildende Polymer geeignetes Lösemittel dosiert aufgegeben, so daß das sich wiederum in Lösung gehende Polymer der Polymerschicht durch die Zentrifugalkräfte des rotierenden Substrats vom Substrat entfernt wird, wobei es auch vorteilhaft sein kann, den Rotationsbetrieb des Substrats so lange fortzusetzen, bis keine Lösemittelrückstände mehr auf dem Substrat vorhanden sind.

Die Erfindung wird nun unter Bezugnahme auf die nachfolgenden schematischen Zeichnungen anhand eines Ausführungsbeispieles eingehend beschrieben. Darin zeigen:

Fig. 1a bis d    unterschiedliche Verfahrensschritte zur Ausbildung einer dünnen Polymerschicht auf einem Substrat mittels des Spin-Coat-Verfahrens,

Fig. 2    im Schnitt ein Teilelement der Vorrichtung zur Ausführung des Verfahrens zur Ausbildung einer dünnen Polymerschicht (Spin-Coater) und

Fig. 3    im Schnitt eine Darstellung gem. Fig. 2, bei der jedoch das zweite wesentliche Vorrichtungselement in Form eines Ellipsometers zusätzlich dargestellt ist, mit dem die Schichtdicke der auf dem Substrat ausgebildeten Polymerschicht ermittelt wird und daraus das Molekulargewicht des die dünne Polymerschicht bildenden Polymers.

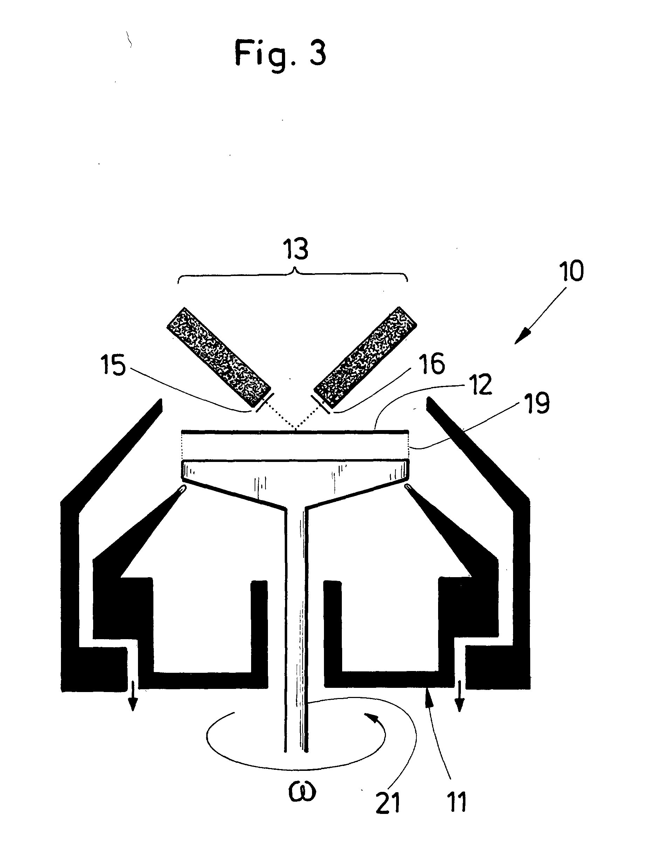

Zunächst wird Bezug genommen auf die Darstellung von Fig. 2, in der eine in Form eines Spin-Coaters ausgebildete Einrichtung 11 zur Herstellung einer dünnen Polymerschicht 12 im Schnitt schematisch dargestellt ist. Kern der Einrichtung 10 ist ein rotierend antreibbarer Drehtisch 21, auf dem ein Substrat 19 im wesentlichen horizontal ausgerichtet ausgebildet ist. Die Einrichtung 11 umfaßt Absaugeinrichtungen, die hier durch die beiden vertikal aus der Vorrichtung 10 nach unten austretenden Pfeile symbolisch dargestellt sind.

Die Vorrichtung 10 umfaßt weiterhin ein Ellipsometer 13, vgl. Fig. 3, das auf geeignete Weise oberhalb des Substrats 19, auf dem die dünne Polymerschicht 12 ausgebildet ist, angeordnet ist. Das Ellipsometer weist vor der jeweiligen Optik 15, 16 Absperreinrichtungen auf, die bei Bedarf in den Strahlengang des Ellipsometers eingeführt werden können und die Optiken 15, 16 vor Lösemitteldämpfen sowie Polymertröpfchen usw. schützen.

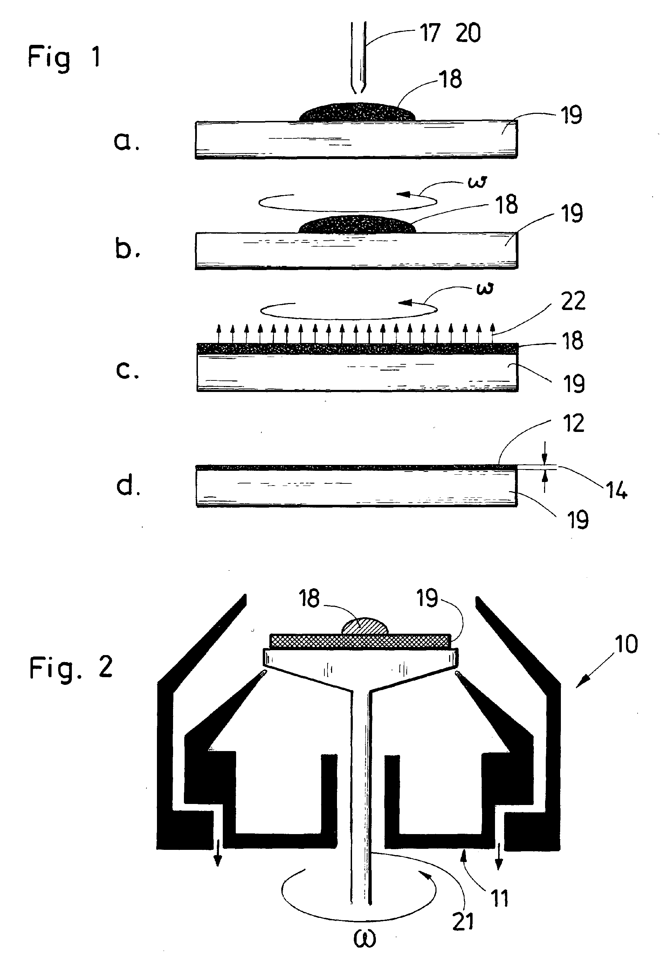

Bezüglich der Schilderung der Ausführung des Verfahrens wird auf die Fig. 1a bis d zusätzlich Bezug genommen. Mittels einer Zuführeinrichtung 17 wird Polymerlösung 18 auf das Substrat 19 geeignet dosiert gegeben. Nachfolgend wird der Drehtisch 21 und somit das darauf angeordnete Substrat in Rotation versetzt, vgl. den Rotationspfeil bzw. Fig. 1 b. Nachdem sich die Polymerlösung 18 durch zeitlich vorbestimmte Rotation des Substrats 19 zu einer Schicht aus Polymerlösung 18 infolge der Fliegkräfte ausgebildet hat, vgl. Fig. 1 c, verdampft das Lösemittel 22, was symbolisch in Fig. 1 c durch die vertikal nach oben gerichteten Pfeile dargestellt ist. Nach dem Verdampfungsvorgang liegt eine dünne Polymerschicht 12 vor, die eine bestimmte Schichtdicke 14 aufweist, vgl. Fig. 1 d.

Nachfolgend wird mittels des Ellipsometers 13 die Schichtdicke der dünnen Polymerschicht 12 bestimmt. Mittels des Ellipsometers 13 wird der Polarisationszustand des an bzw. in der dünnen Polymerschicht 12 reflektierten Lichtes gemessen. Eine Auswertung von Verkippung der Ellipse aus der Einfallsebene und dem Verhältnis von großer zu kleiner Achse liefert das Verhältnis des Fresnel-Koeffizienten und daraus, bei spektral aufgelösten Messungen, die dielektrische Funktion. Ist sie bekannt, kann mittels Ellipsometrie die Schichtdicke der dünnen Polymerschicht bestimmt werden.

Über die Beziehung

$$\text{Schichtdicke } d \sim [\,\eta\,]^{1/3}$$

und

$$[\,\eta\,] = KM^{a} \text{ (Staudinger Gleichung)}$$

kann das Molekulargewicht des die Polymerschicht 12 bildenden Polymer hergeleitet werden, wobei

$$[\,\eta\,] = \text{Grenzviskositätszahl},$$

$$K = \text{Konstante [Volumen/Masse]},$$

$$a = \text{Konstante und}$$

$$M = \text{Molekulargewicht}$$

sind.

Die Konstanten K und a sind vom verwendeten Polymer bzw. vom verwendeten Lösemittel abhängig. Die Parameter K und a sind für nahezu jedes Polymer-Lösemittel-System tabelliert, und zwar im sog. "Polymer Handbook Brandrup Immegut". Aus bestehenden Datenbanken bzw. dem Polymer Handbook sind die entsprechenden Parameter entnehmbar. Es läßt sich dabei ein Lösemittel auswählen, das einen maximalen Wert für den Exponenten a liefert. Daraus resultiert eine maximale Abhängigkeit der Schichtdicke 14 vom Molekulargewicht und der Empfindlichkeit des Verfahrens.

Ist das Molekulargewicht bestimmt, wird die auf dem Substrat 19 befindliche dünne Polymerschicht entfernt. Dazu wird, vgl. Fig. 1a, aus der Zuführeinrichtung 20 eine bestimmte Menge Lösemittel 22 (wenige ml) auf die dünne Polymerschicht 12 gegeben und der Drehtisch 21 und somit das Substrat 19 und somit die dünne Polymerschicht 12 in Rotation versetzt. Durch die Zentrifugalkräfte wird die sich auflösende dünne Polymerschicht 12 vom Substrat 19 entfernt und durch die oben beschriebenen Absaugeinrichtungen aus der Vorrichtung 10 entfernt. Die Rotation des Substrats 19 wird so lange aufrechterhalten, bis sich weder Polymer noch Lösemittel 22 auf dem Substrat 19 befindet. Auch während dieses Entfernungsvorganges sind die Optiken 15, 16 des Ellipsometers 13 durch die besagten Abdeckungen geeignet abgedeckt, so daß weder Lösemittel 22 noch Polymer zu den Optiken gelangen kann. Lösemittel 22 wird für den Vorgang der Entfernung der dünnen Polymerschicht 12 vom Substrat 19 bspw. über einen Zeitraum von 5 bis 10 s gegeben.

Sowohl das Verfahren als auch die Vorrichtung 10 können mit allen vorbeschriebenen Verfahrensschritten bzw. Vorrichtungselementen rechnergestützt gesteuert werden, so daß eine völlig automatisierte Verfahrensführung bzw. Vorrichtungssteuerung möglich ist.

Bezugszeichenliste

10    Vorrichtung

11 Einrichtung zur Herstellung einer dünnen Polymerschicht
12 dünne Polymerschicht
13 Ellipsometer
14 Schichtdicke
15 Optik des Ellipsometers
16 Optik des Ellipsometers
17 Zuführeinrichtung / Polymerlösung
18 Polymerlösung
19 Substrat
20 Zuführeinrichtung / Lösemittel
21 Drehtisch
22 Lösemittel

GKSS-Forschungszentrum Geesthacht GmbH, Max-Planck-Straße, 21502 Geesthacht

Verfahren und Vorrichtung zur Bestimmung des Molekulargewichts von Polymeren

**Patentansprüche**

1. Verfahren zur Bestimmung des Molekulargewichts von Polymeren, **dadurch gekennzeichnet, daß** eine dünne Polymerschicht bereitgestellt wird und daß nachfolgend mittels einer elypsometrischen Methode die Dicke der dünnen Polymerschicht ermittelt wird, wobei aus der ermittelten Dicke über die Beziehung

$$\text{Schichtdicke } d \sim [\,\eta\,]^{1/3}$$

und

$$[\,\eta\,] = KM^{a} \text{ (Staudinger Gleichung)}$$

das Molekulargewicht des Polymers hergeleitet wird und wobei

$$[\,\eta\,] = \text{Grenzviskositätszahl,}$$

$$K = \text{Konstante [Volumen/Masse],}$$

$$a = \text{Konstante und}$$

$$M = \text{Molekulargewicht}$$

sind.

2. Verfahren nach Anspruch 1, **dadurch gekennzeichnet, daß** die dünne Polymerschicht durch ein Spin-Coat-Verfahren hergestellt wird.

3. Verfahren nach Anspruch 2, **dadurch gekennzeichnet, daß** die hergestellte Polymerschicht nach erfolgter Schichtdickenbestimmung von einem Substrat, auf dem es erzeugt worden war, durch Versetzung mit Lösemittel unter Rotation des Substrats vom Substrat entfernt wird.

4. Verfahren nach Anspruch 3, **dadurch gekennzeichnet, daß** das Substrat über ein vorbestimmbares Zeitintervall nach der Entfernung des Polymers weiterhin in Rotation gehalten wird.

5. Vorrichtung zur Bestimmung des Molekulargewichts von Polymeren, **gekennzeichnet durch** eine Einrichtung (11) zur Herstellung einer dünnen Polymerschicht (12) sowie eines Ellipsometers (13), wobei das Ellipsometer (13) zur Bestimmung der Schichtdicke (14) der Polymerschicht (12) oberhalb der Polymerschicht angeordnet ist.

6. Vorrichtung nach Anspruch 5, **dadurch gekennzeichnet, daß** die Optiken (15, 16) des Ellipsometers (13) verschließbar ausgebildet sind.

7. Vorrichtung nach einem oder beiden der Ansprüche 5 oder 6, **dadurch gekennzeichnet, daß** die Einrichtung (11) zur Herstellung der Polymerschicht (12) wenigstens eine Zuführeinrichtung (17) für die Zufuhr einer Polymerlösung (18) auf ein zur Ausbildung der Polymerschicht (12) in Rotation versetzbares Substrat (19) aufweist.

8. Vorrichtung nach Anspruch 7, **dadurch gekennzeichnet, daß** die Einrichtung (11) wenigstens eine Zuführeinrichtung (20) für die Zufuhr eines Lösemittels (20) für das Polymer auf die auf dem in Rotation versetzbaren Substrat (19) ausgebildete Polymerschicht (12) aufweist.

Fig 1

Fig. 2

# Fig. 3

Europäisches
Patentamt

**EUROPÄISCHER RECHERCHENBERICHT**

Nummer der Anmeldung

EP 01 12 8571

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | WO 01 02452 A (SYMYX TECHNOLOGIES INC) 11. Januar 2001 (2001-01-11) * Seite 33 * * Seite 51-53 * | 5-8 | G01N21/21 G01B11/06 |
| A | US 4 863 834 A (BAKER GREGORY L ET AL) 5. September 1989 (1989-09-05) * Spalte 2, Zeile 30-50 * | 1-8 | |
| A | JONES R A L ET AL: "Factors affecting the preparation of permanently end-grafted polystyrene layers" POLYMER, ELSEVIER SCIENCE PUBLISHERS B.V, GB, Bd. 40, Nr. 2, 1999, Seiten 525-530, XP004139693 ISSN: 0032-3861 * Seite 526, Spalte 2 * | 1-8 | |
| A | SIQUEIRA PETRI D F ET AL: "Synthesis of a cellulose thiosulfate and its immobilization on gold surfaces" POLYMER, ELSEVIER SCIENCE PUBLISHERS B.V, GB, Bd. 40, Nr. 6, März 1999 (1999-03), Seiten 1593-1601, XP004151683 ISSN: 0032-3861 * Seite 1596, Spalte 1 * | 1-8 | **RECHERCHIERTE SACHGEBIETE (Int.Cl.7)** G01N G01B |
| A | US 3 892 647 A (PETERSON MARVIN A) 1. Juli 1975 (1975-07-01) * Spalte 11-12 * | 1-8 | |

Der vorliegende Recherchenbericht wurde für alle Patentansprüche erstellt

| Recherchenort | Abschlußdatum der Recherche | Prüfer |
|---|---|---|
| MÜNCHEN | 12. Februar 2002 | Mason, W |

## ANHANG ZUM EUROPÄISCHEN RECHERCHENBERICHT
## ÜBER DIE EUROPÄISCHE PATENTANMELDUNG NR.

EP 01 12 8571

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-02-2002

| Im Recherchenbericht angeführtes Patentdokument | | Datum der Veröffentlichung | Mitglied(er) der Patentfamilie | | Datum der Veröffentlichung |
|---|---|---|---|---|---|
| WO 0102452 | A | 11-01-2001 | US | 2002010267 A1 | 24-01-2002 |
| | | | AU | 3733800 A | 28-09-2000 |
| | | | AU | 5785400 A | 22-01-2001 |
| | | | EP | 1165625 A1 | 02-01-2002 |
| | | | WO | 0053640 A1 | 14-09-2000 |
| | | | WO | 0102452 A1 | 11-01-2001 |
| | | | US | 2002013430 A1 | 31-01-2002 |
| | | | US | 2002001845 A1 | 03-01-2002 |
| | | | WO | 0109204 A2 | 08-02-2001 |
| US 4863834 | A | 05-09-1989 | KEINE | | |
| US 3892647 | A | 01-07-1975 | DE | 2111584 A1 | 21-10-1971 |
| | | | FR | 2081894 A5 | 10-12-1971 |
| | | | GB | 1354531 A | 05-06-1974 |
| | | | JP | 56009559 B | 02-03-1981 |
| | | | JP | 1227149 C | 31-08-1984 |
| | | | JP | 56008436 A | 28-01-1981 |
| | | | JP | 59000525 B | 07-01-1984 |
| | | | JP | 56009393 A | 30-01-1981 |

EPO FORM P0461

Für nähere Einzelheiten zu diesem Anhang : siehe Amtsblatt des Europäischen Patentamts, Nr.12/82